Europäisches Patentamt

European Patent Office

Office européen des brevets

(11) Publication number: **0 106 913**
**B1**

# EUROPEAN PATENT SPECIFICATION

(45) Date of publication of patent specification: **20.01.88**

(51) Int. Cl.⁴: **B 23 F 5/16**

(21) Application number: **82109898.5**

(22) Date of filing: **26.10.82**

(54) Method of shaping a helical gear, and a pinion cutter used therein.

(43) Date of publication of application:
**02.05.84 Bulletin 84/18**

(45) Publication of the grant of the patent:
**20.01.88 Bulletin 88/03**

(84) Designated Contracting States:
**DE FR GB IT**

(56) References cited:
**DE-C- 613 431**
**GB-A- 15 862**
**US-A-2 024 380**
**US-A-2 029 399**
**US-A-3 022 569**

**WERKSTATT UND BETRIEB, vol. 103, no. 7,
1970, pages 533-537, Munich, DE; J.
CLARENBACH: "Schneidrad-
Verzahnungsgeometrie"**

**WERKSTATT UND BETRIEB, vol. 107, no. 9,
1974, pages 556-558, Munich, DE; W. RADEV et
al.: "Vereinfachte Einstellung von
Wälzstossmaschinen"**

(73) Proprietor: **MITSUBISHI JUKOGYO KABUSHIKI
KAISHA**
**5-1, Marunouchi 2-chome Chiyoda-ku
Tokyo 100 (JP)**

(72) Inventor: **Izumo, Masatoshi c/o Kyoto
Machinery Works
Mitsubishi Jukogyo K.K. 1, Uzumasa Tatsumi-
cho
Ukyo-ku Kyoto-shi Kyoto-fu (JP)**

(74) Representative: **Henkel, Feiler, Hänzel & Partner
Möhlstrasse 37
D-8000 München 80 (DE)**

## Description

Background of the invention
1. Field of the invention
This invention relates to a method of shaping a helical gear, and a pinion cutter used therein.

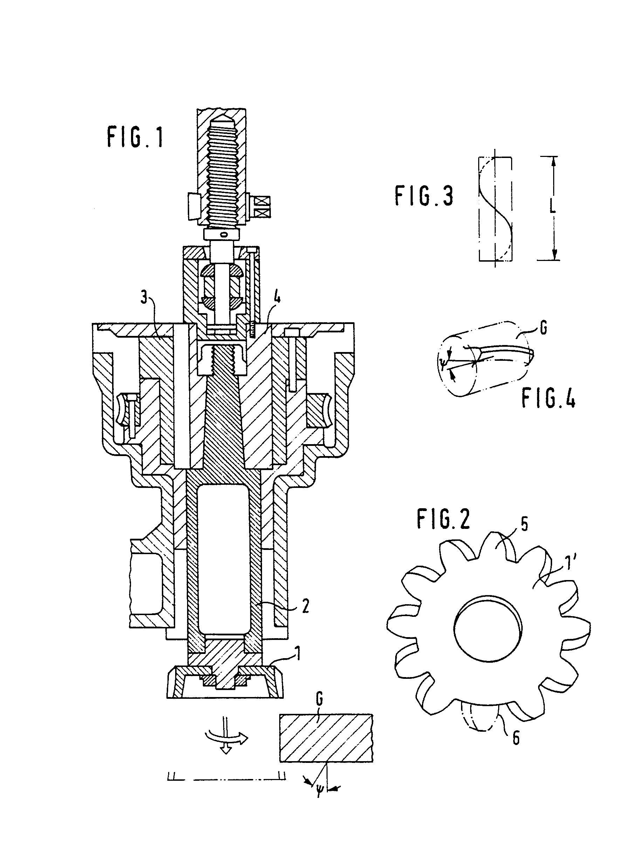

2. Description of the prior art
Figure 1 shows the head portion of a pinion cutter 1 employed in a gear shaper for the formation of a helical gear. The pinion cutter has an angle $\phi$ of twist which is equal to that on a gear material G (Figure 4), but a direction of twist which is opposite to that on the gear material G. A cutter shaft 2 carrying the pinion cutter 1 is supported on a slider 4 which is guided by a helical guide 3. The shaft 2 is adapted to make a spiral reciprocal motion along a spiral groove on the helical guide 3. The spiral groove of the helical guide 3, of which an exploded view is shown in Figure 3, has a lead L which is determined by the normal module $m_n$, and the angle of twist $\phi$ specified on the gear material G, and the number of teeth Z on the pinion cutter 1. The pinion cutter 1 has a normal module $m_n$ and an angle of twist $\phi$ which are equal to those on the gear material G. Thus, the spiral lead L is expressed by equation (1):

$$L = \frac{m_n \cdot Z \cdot \pi}{\sin \phi} \qquad (1)$$

where:
L=spiral lead on the helical guide (mm);
$m_n$=normal module on the pinion cutter (mm);
Z=number of teeth on the pinion cutter; and
$\phi$=angle of twist on the pinion cutter (°).

The number Z of teeth on the pinion cutter 1 is one of the factors on which the spiral lead L depends, as is obvious from equation (1). In the event there is a change in the normal module $m_n$ or the angle $\phi$ of twist on the gear material, however, a change in the number Z of teeth on the pinion cutter does not always serve to maintain the spiral lead L at an equal value, since the number Z is always a natural number. Accordingly, if a gear material having a different normal module $m_n$ or angle $\phi$ of twist is employed, it has hitherto been necessary to use a different pinion cutter, a different helical guide having a different spiral lead L, and a different slider (see: Werkstatt und Betrieb, Vol. 103, No. 7, 1970, pages 533—537, Munich, DE; J. Clarenbach: "Schneidrad—Verzahnungsgeometrie"). The change of the helical guide and the slider is, however, not only a time-consuming job, but also requires a high level of skill for adjustment, resulting in a reduction in operating efficiency. Moreover, it is very uneconomical to keep a lot of different helical guides and sliders, since they are expensive.

Summary of the invention
It is an object of this invention to provide a method which enables the manufacture of a helical gear having any desired angle of twist, and module with a single combination of a helical guide and a slider only if a pinion cutter is changed, so that the gear may be manufactured at a low cost with a high degree of operating efficiency.

It is another object of this invention to provide a pinion cutter which is suitable for use in the manufacture of a helical gear according to the method of this invention.

According to this invention, there is provided a pinion cutter for use in a gear shaper having a helical guide having a spiral lead of length L, for making a helical gear from a gear blank, said pinion cutter having:

(1) an angle of twist $\phi$ and a normal module $m_n$ such that the quantity

$$Z = \frac{L \cdot \sin \phi}{m_n \cdot \pi}$$

is a non-integer;
(2) a number of teeth given by the integer closest to and less than Z;
(3) a pitch circle diameter equal to $(L \cdot \tan \phi)/\pi$; and
(4) a circular pitch which is larger than $m_n \cdot \pi$ at one and only one location on its circular periphery and a circular pitch $m_n \cdot \pi$ at all other locations on its circular periphery.

According to the method of this invention, when the incomplete tooth portion on the pinion cutter has approached a gear material, the tooth cutting operation is resumed either after the gear material and the pinion cutter have been returned to their initial positions, or after only the pinion cutter has been rotated until the incomplete tooth portion passes a point of contact between the pinion cutter and the gear material.

Brief description of the drawings
Fig. 1 is a longitudinal sectional view showing the head portion of a pinion cutter in a gear shaper;
Fig. 2 is a perspective view of a pinion cutter embodying this invention;
Fig. 3 is an exploded view of a spiral groove on a helical guide; and
Fig. 4 is a perspective view of a gear material.

Detailed description of the invention
The number Z of teeth on the pinion cutter is expressed by equation (2):

$$Z = \frac{L \cdot \sin \phi}{m_n \cdot \pi} \qquad (2)$$

where L, $\phi$ and $m_n$ are as defined above. If the spiral lead L is constant, Z may represent a number having a decimal fraction, depending on the module $m_n$ or the angle $\phi$ of twist. Although there has hitherto not been any gear having a number of teeth expressed by a number containing a decimal fraction, this invention is based on the assumption that a gear having a number of teeth represented by a number containing a decimal fraction. The pinion cutter has a pitch circle diameter d expressed by equation (3), hence (3)', in which the spiral lead L is a constant, and the angle $\phi$ of twist depends on the gear material:

$$d = \frac{Z \cdot m_n}{\cos \phi} \qquad (3)$$

$$d = \frac{L}{\pi} \tan \qquad (3)'$$

If a special pinion cutter having a pitch circle diameter d expressed by equation (3)', and a normal module $m_n$ and an angle $\phi$ of twist which are equal to those on the gear material is employed, it is not necessary to change the spiral lead L. This pinion cutter may include a tooth groove having a width which is larger than $m_n \cdot \pi/2$, or smaller than $m_n \cdot \pi$, or an incomplete tooth. If any such incomplete tooth is formed, it is preferable to remove any such tooth, and provide therein a tooth groove having a width which is larger than $m_n \cdot \pi/2$. If the number Z of teeth is, for example, 11.6, there is obtained a pinion cutter 1' having 11 complete teeth, and a tooth groove 6 having a width larger than $m_n \cdot \pi/2$, as shown in Figure 2. The teeth 5 having a spacing represented as $m_n \cdot \pi$ are used for shaping a gear. The pinion cutter 1' has a pitch along the teeth 5 which is equal to that on the gear material, and expressed as $m_n \cdot \pi$, while the two adjoining teeth 5 between which the groove 6 exists have a different pitch. It is, of course, possible to form a pinion cutter with less than 11 complete teeth. The pinion cutter of this invention is easy to manufacture if an appropriate indexing device is employed.

The method of this invention is characterized by using the pinion cutter as hereinabove described. The pinion cutter is formed with a pitch circle diameter d conforming to any desired normal module $m_n$ and angle $\phi$ of twist on the gear material. The pinion cutter is secured to a cutter spindle, and its teeth having a spacing expressed as $m_n \cdot \pi$ are used for the generating and cutting operation in a customary manner. If a cutter portion having a different groove width has approached the gear material, the gear material is moved away from the pinion cutter, and the cutter spindle and the work table are rotated in a reverse direction at a faster speed so that they may be returned to their initial positions to resume the generating and cutting operation. Alternatively, the work table is moved away from the pinion cutter, and the pinion cutter is rotated at a faster speed so that the cutter portion having a different groove width may pass a point of contact between the cutter and the gear material, if the phase of any such cutter portion is adjusted between the cutter spindle and the work table. The discontinuous rotation between the cutter spindle and the work table is easy to accomplish if they are driven in accordance with a program established by a numerical computer system. It is needless to say that if the number Z according to equation (2) is a natural number, it is possible to use an ordinary pinion cutter.

As is obvious from the foregoing description, this invention employs a special pinion cutter formed with a portion having a different groove width to achieve a discontinuous generating motion to enable the manufacture of a variety of helical gears having different angles of twist and modules with a single combination of a helical gear and a slider only if the pinion cutter is changed.

**Claims**

1. A pinion cutter (1) for use in a gear shaper having a helical guide (3) having a spiral lead of length L, for making a helical gear from a gear blank, said pinion cutter having:

(1) an angle of twist $\phi$ and a normal module $m_n$ such that the quantity

$$Z = \frac{L \cdot \sin \phi}{m_n \cdot \pi}$$

is a non-integer;

(2) a number of teeth given by the integer closest to and less than Z;

(3) a pitch circle diameter equal to $(L \cdot \tan \phi)/\pi$; and

(4) a circular pitch which is larger than $m_n \cdot \pi$ at one and only one location on its circular periphery and a circular pitch $m_n \cdot \pi$ at all other locations on its circular periphery.

2. A method of making a helical gear by a gear shaper having a cutter spindle (2) caused by a helical guide (3) to perform a spiral motion, in which is employed a pinion cutter (1) having a number Z of teeth expressed by the following equation:

$$Z = \frac{L \cdot \sin \phi}{m_n \cdot \pi}$$

where:
L=lead;
$\phi$=angle of twist; and
$m_n$=module;
said pinion cutter having a portion from which an incomplete tooth has been removed as Z is not an integer, and which comprises resuming the tooth cutting operation on a gear material after returning said gear material and said pinion cutter to their initial positions when said portion has approached said gear material.

3. A method of making a helical gear by a gear shaper having a cutter spindle (2) caused by a helical guide (3) to perform a spiral motion, in which is employed a pinion cutter (1) having a number Z of teeth expressed by the following equation:

$$Z = \frac{L \cdot \sin \phi}{m_n \cdot \pi}$$

where:
L=lead;
$\phi$=angle of twist; and
$m_n$=module;

said cutter having a portion from which an incomplete tooth has been removed as Z is not an integer, and which comprises resuming the tooth cutting operation on a gear material after rotating only said pinion cutter until said portion passes a point of contact between said pinion cutter and said gear material, when said portion has approached said gear material.

## Patentansprüche

1. Zahnradfräser (1) zur Verwendung in einer Zahnradformfräsmaschine mit einer Spiral- oder Wendelführung (3) einer Wendelsteigung der Länge L, zur Herstellung eines Schrägzahnrads aus einem Zahnradrohling, wobei der Zahnradfräser aufweist:

(1) einen Schränkungswinkel $\phi$ und einen Normal-Modul $m_n$, so daß die Größe

$$Z = \frac{L \cdot \sin \phi}{m_n \cdot \pi}$$

keine ganze Zahl darstellt;

(2) eine durch die ganze Zahl, die am nächsten bei Z liegt und kleiner ist als Z, bestimmte Zähnezahl;

(3) einen Teilkreisdurchmesser entsprechend $(L \cdot \tan \phi)/\pi$; und

(4) eine Zahnkreisteilung, die größer ist als $m_m \cdot \pi$, an ausschließlich einer Stelle auf seinem Kreisumfang und eine Zahnkreisteilung von $m_n \cdot \pi$ an allen anderen Stellen auf seinem Kreisumfang.

2. Verfahren zur Herstellung eines Schrägzahnrades mittels einer Zahnradformfräsmaschine mit einer Fräserspindel (2), die durch eine Spiral- oder Wendelführung (3) mit einer spiraligen Bewegung geführt wird, unter Verwendung eines Zahnradfräsers (1), der eine Zähnezahl Z entsprechend folgender Gleichung

$$Z = \frac{L \cdot \sin \phi}{m_n \cdot \pi}$$

mit
L=Steigung
$\phi$=Schrägungswinkel und
$m_n$=Modul

besitzt und der einen Abschnitt aufweist, in welchem ein unvollständiger Zahn entfernt worden ist, da Z keine ganze Zahl darstellt, wobei der Zahnradfräservorgang an einem Zahnradwerkstück nach der Rückführung desselben und des Zahnradfräsers in ihre Ausgangsstellungen, wenn der genannte Abschnitt sich dem Zahnradwerkstück genähert hat, wieder aufgenommen oder eingeleitet wird.

3. Verfahren zur Herstellung eines Schrägzahnrads mittels einer Zahnradformfräsmaschine mit einer Fräserspindel (2), die durch eine Spiral- oder Wendelführung (3) mit einer spiraligen Bewegung geführt wird, unter Verwendung eines Zahnradfräsers (1), der eine Zähnezahl Z entsprechend folgender Gleichung

$$Z = \frac{L \cdot \sin \phi}{m_n \cdot \pi}$$

mit
L=Steigung
$\phi$=Schrägungswinkel und
$m_n$=Modul

besitzt und der einen Abschnitt aufweist, in welchem ein unvollständiger Zahn entfernt worden ist, da Z keine ganze Zahl darstellt, wobei der Zahnradfräsvorgang an einem Zahnradwerkstück nach dem Drehen nur des Zahnradfräsers, bis der genannte Abschnitt eine Berührungsstelle zwischen dem Zahnradfräser und dem Zahnradwerkstück passiert hat, nachdem sich dieser Abschnitt dem Zahnradwerkstück genähert hat, wieder aufgenommen .bzw. eingeleitet wird.

## Revendications

1. Un outil-pignon (1) à utiliser dans un dispositif de taillage d'engrenages comportant un guide hélicoïdal (3) présentant une piste spirale de longueuer L, pour réaliser un engrenage hélicoïdal à partir d'une ébauche d'engrenage, ledit outil-pignon présentant:

(1) un angle de torsion $\phi$ et un module normal $m_n$ tels que la quantité

$$Z = \frac{L \cdot \sin \phi}{m_n \cdot \pi}$$

est un nombre non entier;

(2) un nombre de dents donné par le nombre entier le plus proche de et inférieur à Z;

(3) un diamètre de cercle primitif égal à $(L \cdot \text{tg } \phi)/\pi$: et

(4) un pas circulaire qui est supérieure à $m_n \cdot \pi$ en un et un seul endroit de sa périphérie circulaire, et un pas circulaire $m_n \cdot \pi$ dans tous les autres endroits de sa périphérie circulaire.

2. Un procédé pour réaliser un engrenage hélicoïdal par un dispositif de taillage d'engrenage comportant une broche d'outil (2) qui est amenée par un guide hélicoïdal (3) à effectuer un déplacement spiral, dans lequel on utilise on outil-pignon (1) présentant un nombre Z de dents exprimé par l'équation suivante:

$$Z = \frac{L \cdot \sin \phi}{m_n \cdot \pi}$$

dans laquelle,

L=pas longitudinal;
φ=angle de torsion; et
$m_n$=module;

ledit outil-pignon comportant une partie de laquelle une dent incomplète a été enlevée car Z n'est pas un nombre entier, et qui comporte la reprise de l'opération de taillage des dents sur la matière d'engrenage après le retour de ladite matière d'engrenage et dudit outil-pignon à leurs positions initiales lorsque ladite partie s'est approchée de ladite matière d'engrenage.

3. Un procédé pour réaliser un engrenage hélicoïdal par un dispositif de taillage d'engrenage comportant une broche d'outil (2) amenée par un guide hélicoïdal (3) à effectuer un déplacement spiral, dans lequel on utilise un outil-pignon (1) présentant un nombre Z de dents exprimé par l'équation suivante:

$$Z = \frac{L \cdot \sin \phi}{m_n \cdot \pi}$$

dans laquelle,

L=pas longitudinal;
φ=angle de torsion; et
$m_n$=module;

ledit outil-pignon comportant une partie de laquelle une dent incomplète a été enlevée car Z n'est pas un nombre entier, et qui comporte la reprise de l'opération de taillage des dents sur une matière d'engrenage après la rotation seulement dudit outil-pignon jusqu'à ce que ladite partie franchisse un point de contact entre ledit outil-pignon et ladite matière d'engrenage lorsque ladite partie s'est approchée de ladite matière d'engrenage.

FIG.1

FIG.3

3

4

FIG.4

FIG.2

5

1'

2

1

G

6